Europäisches Patentamt

European Patent Office

Office européen des brevets

(11) Publication number: **0 144 658**
**A1**

# (12) EUROPEAN PATENT APPLICATION

(21) Application number: **84112602.2**

(22) Date of filing: **18.10.84**

(51) Int. Cl.⁴: **D 21 H 1/02**
**D 21 H 5/26, B 32 B 29/00**
**//A41B15/00**

(30) Priority: **08.11.83 US 550068**

(43) Date of publication of application:
**19.06.85 Bulletin 85/25**

(84) Designated Contracting States:
**AT BE CH DE FR GB IT LI LU NL SE**

(71) Applicant: **KIMBERLY-CLARK CORPORATION**
**401 North Lake Street**
**Neenah Wisconsin 54956(US)**

(72) Inventor: **Endres, Dan D.**
**125 Crestview Drive**
**Appleton Wisconsin(US)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) Tissue products containing internal aqueous barriers.

(57) A tissue product comprising an internal porous barrier layer or ply of papermaking fibers coated with a water repellent agent prevents or inhibits wetting of the user's hands during use and at the same time significantly improves the in-use strength of the product.

EP 0 144 658 A1

# TISSUE PRODUCTS CONTAINING INTERNAL AQUEOUS BARRIERS

## BACKGROUND OF THE INVENTION

Those in the paper industry concerned with the manufacture and marketing of tissues (facial and bathroom) and paper towels are constantly striving to develop products which meet the needs of the consumer. In order to do so, it has long been known that there are many product characteristics that influence the consumer's preference for one product over another. Specifically, product characteristics such as absorbency, softness, strength, and bulk are particularly important. Their relative importance varies with the intended major use of the product, but absorbency is generally considered to be the most important characteristic for most uses. Through extensive market research on facial tissues, however, it has been found that what the consumer means by "absorbency" in a facial tissue is not just absorbency in the technical sense, but rather absorbency is a measure of how well the tissue prevents the consumer's hands from getting wet when blowing his nose. This discovery is very enlightening because previous efforts in developing products have focused on increasing true absorbency and have not been successful.

Therefore there is a need for tissue products which inhibit transmission of moisture, yet which still have the capacity to absorb and hold moisture and maintain sufficient strength when wet.

## SUMMARY OF THE INVENTION

As a result of the abovesaid market research, a tissue product comprising an internal porous barrier layer or ply of papermaking fibers coated with a water repellent agent has been developed to prevent, or at least inhibit, wetting of the user's hands during use and at the same time significantly improve the in-use strength of the product. The fact that the internal barrier layer is porous is important for facial tissues because it allows the user to blow through the tissue, thereby transmitting air while retaining the nasal discharge. For example, when a user blows his nose into a three-ply facial tissue of this invention having an inner layer comprising papermaking fibers coated with a water repellent agent, the nasal discharge will be absorbed by the outer ply touching the nose (the first outer ply), but will be inhibited from contacting the hands touching the other outer ply (the second outer ply) because the barrier layer retards fluid transmission. Therefore, by delaying or reducing the amount of moisture that reaches the second outer ply, the second outer ply retains much or all of its dry strength and therefore the tissue as a whole remains stronger in use. Hence the tissue will not fall apart in use as easily and the user's hands will be less likely to get wet.

For purposes herein, "tissue product" means any sheet product comprising one or more webs of papermaking fibers, having a total basis weight of from about 7 lbs. per 2880 ft.$^2$ to about 40 lbs. per 2880 ft.$^2$. This specifically includes, for example, facial tissues, bathroom tissues, wipes, napkins, and paper towels. These products can be wet laid, air laid, meltblown, or spunbonded. Also, the term "multi-layered" as used herein means a combination of at least three layers or plys and specifically includes, without limitation: three plys; a single ply containing three layers; or two plys, at least one of which has at least two layers. All of these constructions allow for two outer layers of fibers which do not have a water repellent coating and an inner or internal layer of fibers which do have a water repellent coating. It will be appreciated that in any layered tissue structure, as opposed to multi-ply tissues, there will likely be some coated fibers from the inner layer exposed to the outer surface. This is within the scope of this invention, as long as the relative number of such coated fibers is not substantial, i.e., the absorbency of the outer layer of fibers is not substantially affected.

The water repellent agents useful for purposes of this invention can be any chemical which will coat a cellulosic fiber and increase the wetting angle of aqueous fluids which contact the surface of the fiber. There are many types of such water repellent agents which can be used for this purpose and are well known in the chemical arts. Examples of water repellent types include: wax dispersions with or without aluminum or zirconium salts; metal salts and soaps; pyridinium repellents; waxy thermosetting resins; organometallic complexes of chromium and aluminum; silicones; fluorochemicals; and alkyl ketene dimers. Those skilled in the art will appreciate that the suitability of any specific water repellent agent will depend greatly on a wide variety of factors other than technical feasibility, such as economics, processing considerations, toxicity, etc.

In preparing the products of this invention, it is preferable that the water repellent agent be mixed with the papermaking fibers prior to formation of the web. In the case of wet laid products, the water repellent agent is preferably water-soluble or water-dispersible to permit mixing with the aqueous fiber stock slurry before entering the headbox. This is very convenient for products produced from multi-layered headboxes having internal dividers to separate the different stocks or furnishes being used.

For airlaid products, on the other hand, the characteristics of water-solubility or water dispersibility are not necessarily advantageous, since the agent can be premixed with the fibers in a dry state prior to depositing the web. Multiple layers of fibers can easily be formed by sequentially depositing the various types of fibers in the desired sequence, thereby forming the final web with a barrier layer in the middle.

In any case, however, regardless of the manner in which the web is formed, the water repellent agents can be printed or sprayed onto the surface of a web to create a surface layer of water repellent fibers on the web. This can be advantageous for a two-ply product, for example, where the inner surface or surfaces of either or both plys can be coated with the water repellent agent to create the internal water repellent layer. In such a situation, however, care must be exercised not to allow the water-repellent agent to soak entirely through either of the plys and thereby detrimentally affect the absorbency and feel characteristics of the outer surface of the treated ply. Naturally this is more difficult to control with lower basis weight webs as are commonly used for two-ply facial tissues.

## EXAMPLES

### Example 1 (Preparation of 3-Ply Facial Tissue)

A three-ply wet laid facial tissue was prepared in a conventional manner by crimping together the edges of three creped webs. All three webs had a basis weight of about 9 lbs. per 2880 ft.$^2$ and consisted of both softwood and hardwood papermaking fibers. The inner web (barrier layer) consisted of a majority of hardwood papermaking fibers which had been slurried, prior to formation, with 0.0033 weight percent of an alkyl ketene dimer water repellent agent (AQUAPEL®, Hercules, Inc.) based on the weight of the fibers in the stock slurry. The slurry contained about 0.5 weight percent fibers. All three webs were wet laid, dried, and creped in the manner well-known to those skilled in the papermaking art. The final three-ply tissue had a machine-direction (MD) dry tensile strength of 1829 grams and a cross-machine direction (CD) dry tensile strength of 744 grams. The basis weight of the three-ply tissue was about 27 pounds per 2880 ft.$^2$.

Example 2 (Fluid Transmission)

In order to illustrate the effectiveness of the internal barrier in preventing the transmission of aqueous fluids, two laboratory tests were conducted, namely the Wettability Test and the Flow Through Test. Both tests used two different three-ply tissues, one of which was a control having no water repellent treatment (control) and the other was a tissue of this invention (barrier tissue) from Example 1 having a water repellent inner ply. The Wettability Test consisted of measuring the time required for a 2½" x 2½" pad of 20 sheets to become totally wetted after placing it on the surface of a water bath at room temperature. The Flow Through Test measured the amount of fluid passing through a tissue into a blotter under a pressure load. In this test an aqueous solution containing 1 weight percent carboxymethyl cellulose was used to simulate mucus. One milliliter of the solution was dropped onto a test tissue which was laying on a blotter. After the solution was applied to the test tissue, a weight was placed over the wetted area of the tissue to create a pressure load (0.1 psi.) The percentage of the solution transmitted to the blotter was then measured after 10 seconds. The results of both tests are set forth in tabular form below:

|  | Control | Barrier Tissue of This Invention |
|---|---|---|
| Wettability Test | 3.0 seconds | 30+ seconds |
| Flow Through Test | 69 percent transmission | 10 percent transmission |

These results clearly show the effectiveness of the barrier layer in inhibiting fluid transmissions.

In order to test the performance of the tissues in actual use, a panel of people with colds was recruited to use the tissues. Panelists were asked to record whether or not their hands were damp after blowing their noses. The results are set forth in the table below:

0144658

|  | Control | Barrier Tissue of This Invention |
|---|---|---|
| Number of Tissues Used | 308 | 317 |
| Percent of Users Reporting Damp Hands | 11% | 5% |

These results clearly indicate the in-use effectiveness of the tissue of this invention in reducing wetness.

Example 3 (Strength Retention)

 In order to illustrate the property of in-use strength retention, a typical wet strength test was run on the tissues described in Examples 1 and 2. In this test a 3" wide strip of tissue was wetted by laying it on the surface of a water bath for about 1 to 3 seconds and blotting away any excess water. The strip was then inserted into a tensile testing machine to measure the tensile force (in grams) necessary to break the sample. The results are set forth in the table below:

|  | Control | Barrier Tissue of This Invention |
|---|---|---|
| Cross Direction Strength (Dry) | 752 gms. | 744 gms. |
| Cross Direction Strength (Wet) | 196 gms. | 455 gms. |

As shown, the measured tensile strength after wetting was substantially higher for the barrier tissue of this invention.

 In order to illustrate how the tissues retained strength in actual use, a panel of people with colds was recruited to compare the tissues by recording the number of tissues which tore during use. The results are set forth in the table below:

0144658

|  | Control | Barrier Tissue of This Invention |
|---|---|---|
| Number of Tissues Used | 308 | 317 |
| Percent of Tissues Torn | 1.9% | 0 |

Although the percentage of control tissues which tore during this test was unusually low, by comparison the three-ply tissue of this invention having the water repellent inner ply gave improved performance.

It will be appreciated by those skilled in the art that the foregoing examples are shown only for purposes of illustration and are not to be considered as limiting the scope of this invention.

0144658

I CLAIM:

1. A multi-layered tissue product comprising a first outer layer of fibers, a second outer layer of fibers, and an inner layer of fibers, wherein only said inner layer of fibers contains a substantial amount of fibers coated with a water-repellent agent.

2. The product of Claim 1 wherein each of the layers is a single-ply, wet laid, creped web.

3. The product of Claim 2 wherein there are three plys.

4. The product of Claim 1 comprising a single ply having three layers.

5. The product of Claim 4 wherein the three layers are air laid.

6. The product of Claim 4 wherein the three layers are wet laid.

7. A three-ply facial tissue comprising a creped first outer ply of wet laid papermaking fibers, a second creped outer ply of wet laid papermaking fibers, and an inner ply of wet laid papermaking fibers, wherein said inner ply contains a substantial amount of fibers coated with a water repellent agent.

8. The tissue product of Claim 7 wherein the inner ply comprises hardwood fibers.

9. The tissue product of Claim 8 wherein the outer plys consist essentially of softwood fibers and the inner ply consists essentially of a majority of hardwood fibers.

10.  The tissue product of Claim 9 wherein all of the fibers in the inner ply are coated with a water repellent agent.

11.  The tissue product of Claim 10 wherein the water repellent agent is an alkyl ketene dimer.

12.  The tissue product of Claim 11 wherein the total basis weight of the product is about 27 pounds per 2880 square feet.

0144658

**European Patent Office**

## EUROPEAN SEARCH REPORT

Application number

EP 84 11 2602

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl 4) |
| X | US-A-1 682 346 (W. LORENZ)<br><br>* Whole document *<br><br>--- | 1-4,6, 7,10 | D 21 H  1/02<br>D 21 H  5/26<br>B 32 B 29/00<br>//A 41 B 15/00 |
| X | GB-A-2 085 356 (A. ELLAM)<br><br>* Figures 3,4; claims 8,10,11,14; page 2, lines 51-66 *<br><br>--- | 1-3,6, 10 | |
| X | US-A-4 071 651 (D. HICKLIN et al.)<br><br>* Whole abstract *<br><br>--- | 1,3-5, 10 | |
| A | US-A-3 953 638 (C. KEMP)<br><br>* Front page; example I *<br><br>--- | 1-3, 6-10 | **TECHNICAL FIELDS SEARCHED (Int. Cl.4)**<br><br>D 21 H |
| A | TAPPI, Vol. 60, No. 10, Oktober 1977, pages 113-115, ATLANTA, GA, (US)<br>L.D. ERICKSON:"Physical properties of stratified sheets".<br><br>* Whole document *<br><br>----- | 8,9 | |

The present search report has been drawn up for all claims

| Place of search | Date of completion of the search | Examiner |
|---|---|---|
| THE HAGUE | 13-02-1985 | M. NESTBY K. |